# EUROPEAN PATENT SPECIFICATION

(11) **EP 2 225 130 B1**
(45) Date of publication and mention of the grant of the patent: **19.08.2015**
(21) Application number: 07852135.8
(22) Date of filing: 20.12.2007
(51) Int. Cl.: B60T 5/00, F16D 65/847, B60T 17/18, B60T 17/22, F16D 65/853

(54) **A METHOD AND A VEHICLE SYSTEM FOR ENSURING THE FUNCTIONALITY OF A BRAKE ASSEMBLY AND A VEHICLE COMPRISING SUCH SYSTEM**
VERFAHREN UND FAHRZEUGSYSTEM ZUR GEWÄHRLEISTUNG DER FUNKTIONALITÄT EINER BREMSANORDNUNG UND FAHRZEUG MIT SOLCH EINEM SYSTEM
PROCÉDÉ ET SYSTÈME DE VÉHICULE POUR GARANTIR LA FONCTIONNALITÉ D'UN ENSEMBLE DE FREIN ET VÉHICULE INCLUANT UN TEL SYSTÈME

(43) Date of publication of application: 08.09.2010
(73) Proprietor: Volvo Lastvagnar AB, 405 08 Göteborg (SE)
(72) Inventor: SABELSTRÖM, Mats, S-427 37 Billdal (SE); PETERSSON, Martin, S-433 68 Sävedalen (SE)
(74) Representative: Fröhling, Werner Otto
(86) International application number: PCT/SE2007/001139
(87) International publication number: WO 2009/082273

(56) References cited:
- EP-A1- 0 057 618
- EP-A2- 1 203 896
- EP-A2- 1 350 984
- WO-A1-01/29442
- WO-A1-93/10369
- WO-A1-2007/054993
- DE-A1- 4 323 782
- DE-A1- 19 602 839
- DE-A1- 19 838 116
- FR-A1- 2 841 952
- JP-A- 3 125 656
- US-A- 3 347 344
- US-B1- 6 357 563

## Description

### TECHNICAL FIELD

The present invention relates to a vehicle system comprising a compressed air system and a brake assembly. The compressed air system comprises an actuating means for actuating a pneumatic-controlled vehicle component and an exhaust outlet adapted to discharge exhaust air from the actuating means. The vehicle system comprises a discharge device for discharging air to at least a portion of the brake assembly.

The present invention also relates to a method of improving the braking characteristics of a brake assembly. Furthermore, the present invention also relates to the use of exhaust air in order to improve the braking characteristics of a brake assembly.

### BACKGROUND OF THE INVENTION

Vehicles of today are generally provided with a plurality of brake assemblies. Generally, each one of the wheels of the vehicle is provided with a brake assembly adapted to regulate the rotational resistance of the wheel. However, in some applications it suffices to provide only a few of the wheels, preferably at least two, with braking assemblies.

The type of brake assembly may for instance be a drum brake or a disk brake although the disk brake is nowadays the prevailing brake type. However, as a general feature, a brake assembly generally comprises a rotating member, which rotating member in the drum brake is a drum and in the disk brake is the disk, the rotational velocity of which may be reduced or even stopped by means of a friction member adapted to bear on the rotating member during braking.

Irrespective of the type of brake used in the brake assembly, there is a generally need to ensure that the brake assembly functions properly, i.e. ensuring that the braking capacity of the braking assembly is not impaired. The braking assembly may be impaired in a plurality of ways. As an example, at least one of the components of the brake assembly may be subjected to deformations if exposed to excessive heat or if the component for a long time attains a temperature which is above the preferred for the component. Furthermore, the friction force between the rotating member and the friction member may be reduced if any one of the two components attains temperature which is above a threshold value. The excessive heat and/or high temperature mentioned above may generally be derived from friction heat generated by the contact between the rotating member and the friction member during braking.

As another example of brake impairment, dirt or fragments from the brake assembly itself (i.e. brake dust) may be present on the rotating member and/or friction member resulting in an uneven and/or reduced contact between the two components which may result in a reduced frictional force between the rotating member and the friction member. Additionally, an uneven contact between the two components may necessitate the need for a premature replacement of at least one of the two components with a resulting additional replacement cost for the owner of the vehicle. Moreover, modern disk brake assemblies may be provided with a brake disk which is displaceable along the disk's axis of rotation. This feature is most often present in brake assemblies having a rigid brake caliper and the purpose of this diplacability is to ensure that the brake disk is located in the centre of the caliper. However, should dirt and/or fragments from the brake assembly be present between the brake disk and the brake assembly, displacement along the disk's axis of rotation may be impaired.

As may be realized from the above, there is a desire to keep a low temperature of a brake assembly as well as to keep the brake assembly sufficiently clean.

In order to keep a brake assembly sufficiently cool, EP 1 249 631 proposes the use of a device comprising a compressed air source which is connected to a discharge nozzle by means of a conduit. The discharge nozzle directs air at a portion of the brake assembly such that the air is decompressed as it exits the nozzle. As such, at least a portion of the brake assembly is cooled by the decompressed air discharged onto the portion.

However, the '631 device have some disadvantages. For example, whenever a brake assembly is cooled by the '631 device, the pressure in the compressed air source decreases which generally results in that a compressor has to be activated in order to restore the air pressure in the compressed air source. Naturally, this results in an increased energy consumption of a vehicle onto which the '631 device is mounted. Moreover, the '631 device generally requires additional control arrangements, such as valves, connected between the compressed air source and the discharge nozzle in order to control the supply of air to the nozzle. Such additional control arrangements will threshold value. The excessive heat and/or high temperature mentioned above may generally be derived from friction heat generated by the contact between the rotating member and the friction member during braking.

As another example of brake impairment, dirt or fragments from the brake assembly itself (i.e. brake dust) may be present on the rotating member and/or friction member resulting in an uneven and/or reduced contact between the two components which may result in a reduced frictional force between the rotating member and the friction member. Additionally, an uneven contact between the two components may necessitate the need for a premature replacement of at least one of the two components with a resulting additional replacement cost for the owner of the vehicle. Moreover, modem disk brake assemblies may be provided with a brake disk which is displaceable along the disk's axis of rotation. This feature is most often present in brake assemblies having a rigid brake caliper and the purpose of this diplacability is to ensure that the brake disk is located in the centre of the caliper. However, should dirt and/or fragments from the brake assembly be present between the brake disk and the brake assembly, displacement along the disk's axis of rotation may be impaired.

As may be realized from the above, there is a desire to keep a low temperature of a brake assembly as well as to keep the brake assembly sufficiently clean.

In order to keep a brake assembly sufficiently cool, EP 1 249 631 proposes the use of a device comprising a compressed air source which is connected to a discharge nozzle by means of a conduit. The discharge nozzle directs air at a portion of the brake assembly such that the air is decompressed as it exits the nozzle. As such, at least a portion of the brake assembly is cooled by the decompressed air discharged onto the portion.

Also document EP1203896 relates to a system rooling a brake component by use of a compressed air source.

However, the '631 device have some disadvantages. For example, whenever a brake assembly is cooled by the '631 device, the pressure in the compressed air source decreases which generally results in that a compressor has to be activated in order to restore the air pressure in the compressed air source. Naturally, this results in an increased energy consumption of a vehicle onto which the '631 device is mounted. Moreover, the '631 device generally requires additional control arrangements, such as vaives, connected between the compressed air source and the discharge nozzle in order to control.the supply of air to the nozzle. Such additional control arrangements will naturally increase the cost and complexity of vehicle onto which the '631 device is mounted.

Furthermore, the compressed air source of the '631 device generally feeds additional compressed air systems with pressurized air which additional systems may be a brake system or a wheel suspension. The amount of pressurized air supplied from the compressed air source to the discharge nozzle is generally regulated by an adjusting arrangement comprising a valve. Should the adjusting arrangement malfunction so that air is constantly fed to the discharge nozzle, there is a risk that the pressure in the compressed air source will gradually decrease which may result in an even further increase of the energy consumption. In a worst case scenario, should the '631 device not be provided with additional security arrangements the purpose of which is to stop the aforesaid discharge of air from the compressed air source, the malfunction of the adjusting arrangement may even result in a reduced operability of the additional pressurized air systems. This is why many jurisdictions for instance prohibits the direct use of compressed air, intended to be used for a brake assembly, for other purposes than actual braking operations.

### SUMMARY OF THE INVENTION

A first object of the present invention is to provide a system for a vehicle which may be used for ensuring the functionality of a brake assembly of the vehicle, which system requires relatively low additional energy consumption.

A second object of the present invention is to provide a system for a vehicle which may be used for ensuring the functionality of a brake assembly of the vehicle, wherein a malfunction of the system does not result in that other compressed air systems of the vehicle also are impaired.

A third object of the present invention is to provide a system for a vehicle which may be used for ensuring the functionality of a brake assembly of the vehicle, which includes few components and may be easily and inexpensively installed.

At least one of the objects is achieved by an attachment arrangement according to claim 1.

Thus, the invention relates to a vehicle system comprising a compressed air system and a brake assembly. The compressed air system comprises an actuating means for actuating a pneumatic-controlled vehicle component and an exhaust outlet adapted to discharge exhaust air from the actuating means. The vehicle system comprises a discharge device for discharging air to at least a portion of the brake assembly. According to the invention, the exhaust outlet and the discharge device are in fluid communication so as to convey exhaust air from the actuating means to the brake assembly.

As such, rather than discharging exhaust air, i.e. air which is discharged from the actuating means 18 during a retraction of the same, to the ambient air of the vehicle system as done in prior art compressed air systems, the exhaust air is instead re-used so as to be discharged to at least a portion of the brake assembly. Thus, the portion of the brake assembly may for instance be cooled and/or cleaned by the re-used exhaust air discharged from the discharge device which provides for that the functionality of the brake assembly may be assured using a low additional energy consumption.

Furthermore, should there be a leak or rupture in the fluid communication between the exhaust outlet and the discharge device, exhaust air from the regulating means will enter the ambient air instead of the discharging device but this leak or rupture will not affect the pressure in the source of compressed air feeding additional actuating systems, such as the braking system and/or wheel suspension.

According to a preferred embodiment of the present invention, the compressed air system is a brake system. Preferably, the brake system is adapted to act on the brake assembly comprising the discharge device. In this manner the distance between the exhaust outlet and the discharge device is small, resulting in that the connection between the exhaust outlet and the discharge device, which connection may for example be a conduit, may be short, resulting in low production costs, as well as enhances the operability, of the connection.

As second aspect of the present invention relates to a method of ensuring the functionality of a brake assembly of a vehicle. The vehicle further comprises a compressed air system which in turn comprises an actuating means and an exhaust outlet adapted to discharge exhaust air from the actuating means, wherein the ensuring of the functionality of the brake assembly comprises a step of discharging pressurized air to the brake assembly. According to the invention the method further comprises a step of conducting the exhaust air to the brake assembly, such that the exhaust air constitutes the pressurized air.

A preferred embodiment of the second aspect of the present invention comprises a step of determining a temperature of at least a portion of the brake assembly. Furthermore, should the temperature be above a predetermined value, the method further comprises a step of initiating an actuating sequence, which actuating sequence comprises an actuating and a retracting of the actuating means, such that exhaust air is obtained.

Thus, if the temperature of a portion of the brake assembly is high the portion may be cooled by discharging air onto it. Since the vehicle system of the present invention uses exhaust air for cooling the portion of the brake assembly, the actuating means of the compressed air system is imparted an actuation and a retraction thus generating the exhaust air needed. Moreover, an increased temperature of a brake assembly is generally obtained during a period of continuous braking. As such, in particular if the compressed air system is part of a brake system acting on the heated brake assembly, the sequence above will in itself reduce the heating of the brake assembly, since the sequence involves a step of retracting the actuator which in this case is a brake cylinder. Preferably, if the compressed air system is part of the brake system, the sequence above is performed such that the braking pressure requested by the driver is maintained. Thus, the actuation and retraction of the actuating means, which in this case is a brake cylinder, generates a braking pulse the average pressure of which substantially equals the requested braking pressure.

Furthermore, during the above sequence, occupants of the vehicle may be aware of signals from the brake assembly, such as possible noise and feel of braking variations. These signals may inform the occupants, in particular the driver, that there is an impending risk that the brake assembly is about to be over heated and that the driver should reduce the braking effort.

A third aspect of the invention relates to a use of exhaust air from a compressed air system of a vehicle system wherein the vehicle system further comprising a brake assembly. According to the third aspect of the present invention, the exhaust air is used in order to improve or maintain the braking characteristics of said brake assembly.

### BRIEF DESCRIPTION OF THE DRAWINGS

The present invention will hereinafter be further explained by means of non-limiting examples with reference to the appended figures wherein:
- Fig. 1A: is a schematic view of an embodiment of the vehicle system of the present invention when the actuating means is actuated;
- Fig. 1B: is a schematic view of the Fig. 1A embodiment when the actuating means is retracted;
- Fig. 2: is a schematic cross-sectional view of an implementation of a brake assembly according to the present invention;
- Fig. 3: is a schematic cross-sectional view of a further implementation of a brake assembly according to the present invention;
- Fig. 4A: is a schematic view of a further embodiment of the vehicle system of the present invention when the actuating means are actuated;
- Fig. 4B: is a schematic view of the Fig. 4A embodiment of the vehicle system of the present invention when the actuating means are retracted;
- Fig. 5A: is a schematic view of another embodiment of the vehicle system of the present invention when the actuating means are actuated;
- Fig. 5B: is a schematic view of the Fig. 5A embodiment of the vehicle system of the present invention when the actuating means are retracted;
- Fig. 6: is a schematic perspective view illustrating an embodiment of the vehicle system of the present invention, when mounted on a vehicle;
- Fig. 7: is a schematic view of still another embodiment of the vehicle system of the present invention, and
- Fig. 8: is a schematic view of yet another embodiment of the vehicle system of the present invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

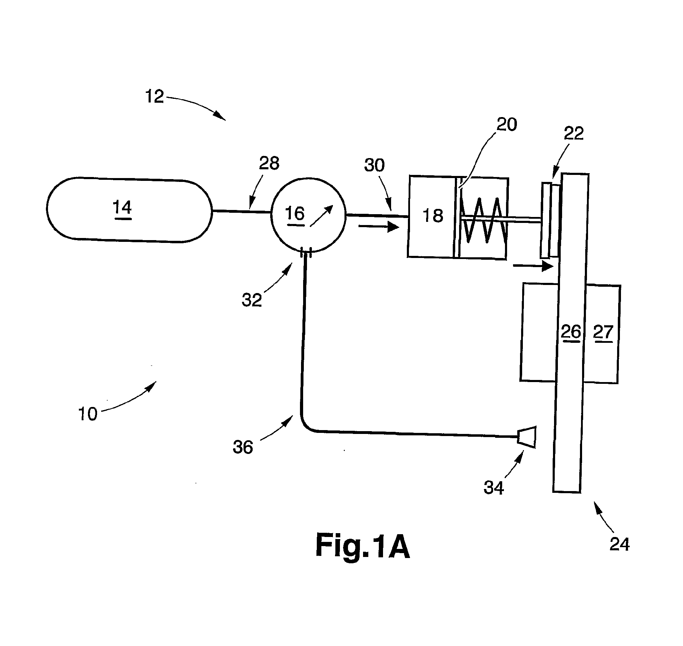

Fig.1A illustrates a vehicle system 10 comprising a compressed air system 12. In Fig. 1A, the compressed air system 12 is a brake system but any other compressed air system 12 of the vehicle may be used in the vehicle system of the invention, as long as it provides exhaust air. Purely by way of example, a compressed air wheel suspension (not shown) may be used as the compressed air system 12 of the inventive vehicle system 10.

Irrespective of which compressed air system 12 is comprised in the vehicle system 10, the compressed air system 12 illustrated in the appended figures comprises three components: a source of compressed air 14; regulating means 16, and actuating means 18. The source of compressed air 12 is typically a tank, adapted to store and supply pressurized air. Purely by way of example, should vehicle system 10 of the present invention be mounted on a heavy vehicle or truck, the volume of the tank may be in the range of 20 to 40 litres and the tank may be adapted to store air at a pressure within the range of 700 - 1200 kPa. Generally, a compressor (not shown) is connected to the source of compressed air 14 such that the source may be supplied with pressurized air e.g. whenever the pressure in the source of compressed air 14 is below a predetermined value. The source of compressed air 14 may also comprise a plurality of tanks (not shown), which tanks are in fluid communication with one another. Optionally, although less preferred, the source of compressed air 14 may simply be constituted by a compressor (not shown).

It should be noted, that the expression "air" used herein encompasses all gas mixtures the composition of which is similar to air. As such, additional gases may be added to the air in the compressed air system 12 without departing from the scope of the present invention.

As for the regulating means 16, it generally comprises a valve arrangement adapted to control the supply of pressurized air to and from the actuating means 18. To this end, the regulating means 16 is generally in communication with a control arrangement (not shown) which generally is an electronic control unit (ECU) adapted to provide the regulating means 16 with control signals according to which the regulating means 16 adjusts. Naturally, the control arrangement may form a part of the regulating means 16. If the valve arrangement is adapted to respond to electronic signals, it is often denoted a modulator and a regulating means comprising a modulator and an ECU is sometimes denoted an EBS modulator. Since the compressed air system 12 in Fig. 1A is a brake system, the regulating means 16 is in communication with a brake pedal (not shown) of the vehicle, either directly, e.g. via an additional pressurized air conduit (not shown), or indirectly, e.g. electronically via the control arrangement.

The actuating means 18 is adapted to actuate a pneumatically controlled vehicle component and generally comprises a piston 20 the position of which is determined by the air pressure in the actuating means. As may be gleaned from Fig. 1A, the piston 20 is connected to a brake pad 22 of a brake assembly 24, which brake pad 22 is adapted to bear on a rotating member 26, which in Fig. 1A is exemplified by a brake disk, of the brake assembly 24. In practice, the actuating means 18 and the brake pad 22 are generally accommodated within a caliper (not shown) of the brake assembly 24. The rotating member 26 is generally attached to a hub 27 which is adapted to receive a wheel (not shown).

Fig. 1A further illustrates that the compressed air system 12 is in fluid communication with the regulating means 16, which fluid communication preferably is achieved by a conduit system 28 comprising at least one conduit. The regulating means 16 is in turn in fluid communication with the actuating means 18, which fluid communication also preferably is achieved by a conduit system 30 comprising at least one conduit. The conduits in the vehicle system 10 of the present invention may assume various shapes and may be made of different kind of materials. Purely by way of example, some conduits may be flexible tubes made from e.g. rubber or a plastics material while some conduits may be substantially rigid tubes made from metal such as steel or copper.

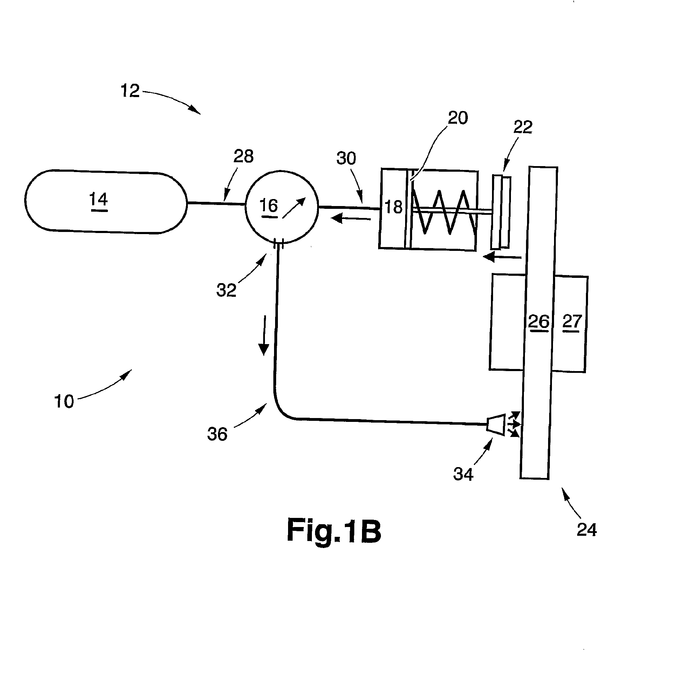

Fig. 1A further illustrates that the compressed air system 12 comprises an exhaust outlet 32 adapted to discharge exhaust air from the actuating means 18. How this is achieved is discussed in detail in conjunction with Fig. 1B hereinbelow. In the illustrated embodiments of the vehicle system 10 of the present invention, the exhaust outlet 32 is located in the regulating means 16, which is a preferred location of the exhaust outlet 32. However, the exhaust outlet 32 may of course be located at other positions of the compressed air system 12, e.g. in the actuating means 18 or in the conduit system 30 connecting the regulating and actuating means 16, 18.

As may be gleaned from Fig. 1A, the vehicle system further comprises a discharge device 34 adapted to discharge air to a portion of the brake disk 26 of the brake assembly 24. The discharge device 34 is in Fig. 1A illustrated as a discharge nozzle although other implementations of the discharge device 34 are possible. Furthermore, Fig. 1A illustrates that the exhaust outlet 32 and the discharge device 34 are in fluid communication. Again, the fluid communication is preferably achieved by a conduit system 36 comprising at least one conduit. The conduit system 36 may comprise filtering or cleaning means for cleaning the exhaust air before discharging it through the discharge device 34.

It should be noted that the source of compressed 12 air may be in fluid communication with a plurality of regulating means 16 which in turn may be in fluid communication with a plurality of actuating means 18. As an example, in trucks or heavy vehicles of today, the source of compressed air 14, or pressure air tank, generally supplies a plurality of compressed air brake systems with air wherein each one of the compressed air brake systems further comprises a regulating means 16. Moreover, each regulating means 16 may be connected to two or more actuating means 18, i.e. brake pistons, wherein each one of the actuating means 18 is connected to a brake pad 22. Purely by way of example, a compressed air brake system may comprise two actuating means 18 located on opposite sides of a brake disk 26.

Fig. 1A illustrates the compressed air system 12 in a condition wherein the actuating means 18 is actuated, i.e. when performing a braking operation. Thus, the regulating means 16 is controlled such that pressurized air is conducted to the actuating means 18, resulting in that the actuating means 18 is actuated such that the brake pad 22 moves towards the brake disk 26 to bear on the same at a desired contact pressure. The brake pad 22 will then remain in the contacting relationship with the brake disk 26 as long as the condition of the regulating means illustrated in Fig. 1A 16 remains un-changed.

Fig. 1B illustrates the vehicle system 10 of Fig. 1A when the compressed air system 12 is in a condition wherein the actuating means 18 is retracted. In this condition, the regulating means 16 is controlled such that pressurized air accumulated in the actuating means 18 is conducted back to the regulating means 16 through the conduit system 30. This is generally achieved by urging the regulating means 16 to open a valve (not shown) between the conduit system 30 and the exhaust outlet 32. The actuating means 18 generally comprise a retracting means urging the actuating means 18 to retract when the pressure in the actuating means 18 decreases due to the opened passage between the conduit system 30 and the exhaust outlet 32. The retracting means may for instance be biasing means such as a helical spring. However, in other types of compressed air system 12, for instance a wheel suspension system (not shown), the retracting means may be omitted since the retracting effect may be obtained by the gravity of the body (not shown) attached to the upper end of the wheel suspension system.

The pressurized air returned from the actuating means 18 is generally denoted exhaust air and is discharged through the exhaust outlet 32 of the regulating means 16. Traditionally, exhaust air simply has been released to the ambient air, but according to the teachings of the present invention, the exhaust air is instead conducted to the discharge device 34 and discharged to at least a portion of the brake assembly, which portion in Fig.1B is a portion of the brake disk 26. Thus, the exhaust air is used for e.g. cleaning and/or cooling of the brake disk 26.

Depending on the effect desired by discharging the exhaust air to a portion of the brake assembly 24, the discharge device 34 may have various designs. Purely by way of example, should the main objective of the discharge device 34 be to cool the portion of the brake assembly, the discharge device 34 may be designed so as to conduct a rapid expansion of the exhaust air when leaving the discharge device 34 such that a temperature decrease of the air is obtained, resulting in a corresponding temperature decrease of the portion of the brake assembly 24, i.e. the brake disk 26 in Fig. 1A and 1B. A cooling discharge device 34 may further be adapted to generate a smooth stream of air which is cooled by the expansion of the air in the discharge device 34.

Naturally, the vehicle system 10 of the present invention may of course be provided with a plurality (not shown) of discharge devices 34, all in fluid communication with the exhaust outlet, discharging to different portions of the brake assembly. The discharge devices 34 may then have designs which differ from one another. Purely by way of example, at least one of the discharge devices 34 may optimized for cooling purposes whereas another discharge device 34 may be optimized for cleaning purposes. Again, purely by way of example, a discharge device 34 for cleaning purposes may for instance be designed so as to generate air pressure impulses discharged to the portion of the brake assembly 24 which impulses may push dirt and/or fragments away from the brake assembly 24.

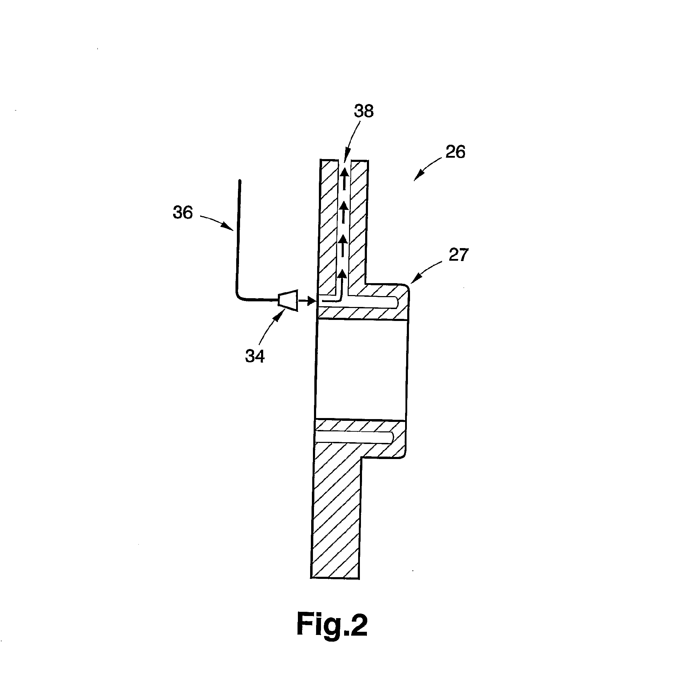

Fig. 2 illustrates another location of a discharging device 34. In Fig. 2, the brake disk 26 comprises a radially extending opening 38 which is in fluid communication with a circumferentially extending cavity 40 in the hub 27. As may further be gleaned from Fig. 2, the discharging device 34 discharges into the hub cavity 40. As such, when the Fig. 2 discharging device 34 discharges air into the hub cavity 40, the air will pass through the radially extending opening 38 and thus cool the brake disk 26 from within.

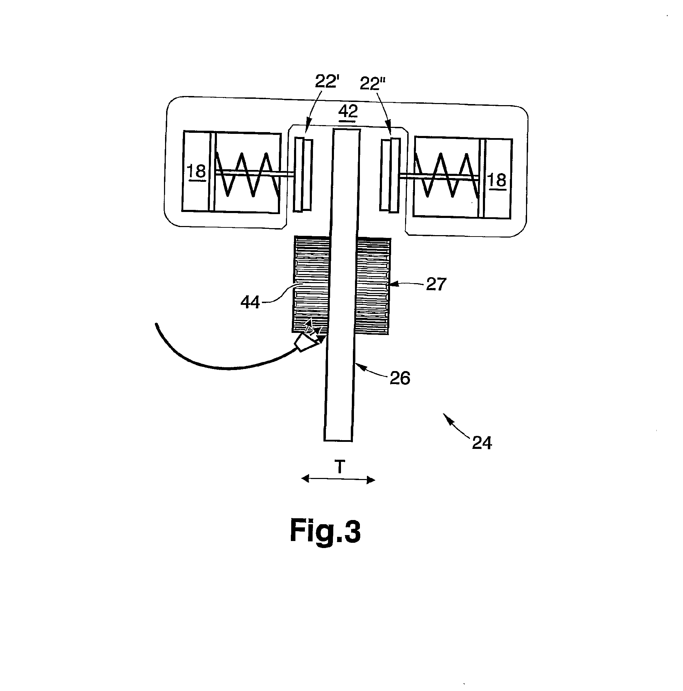

Fig. 3 illustrates an alternative design of a brake assembly 24 which may be used in the vehicle system 10 of the present invention. The Fig. 3 brake assembly 24 comprises two brake pads 22', 22" accommodated in a fixed caliper 42 and located on opposite sides of the brake disk 26. In order to assure an appropriate braking function of the assembly 24, it is desired that the brake disk 26 is located in the centre of the caliper 42 such that the distance between the brake disk 26 and one brake pad 22' substantially equals the distance between the brake disk 26 and the other brake pad 22". As such, the brake assembly 24 is preferably provided with means for imparting the brake disk 26 a translational displacement, i.e. a displacement along the dimension indicated by T in Fig. 3 which dimension is substantially parallel with the axis of rotation of the brake disk 24. To this end, the hub 27 and brake disk 26 are preferably provided with a meshing splines arrangement 44 (only the hub 27 portion of the splines arrangement is visible in Fig. 3) allowing a translational displacement, but preventing a rotational displacement, of the brake disk 26 in relation to the hub 27. It is generally preferred that the splines arrangement 44 is kept sufficiently clean in order to function properly. Accordingly, the implementation of the brake assembly 24 illustrated in Fig. 3 comprises a discharge device 34 adapted to discharge air to at least a portion of the splines arrangement 44 such that dirt and/or brake dust may be removed.

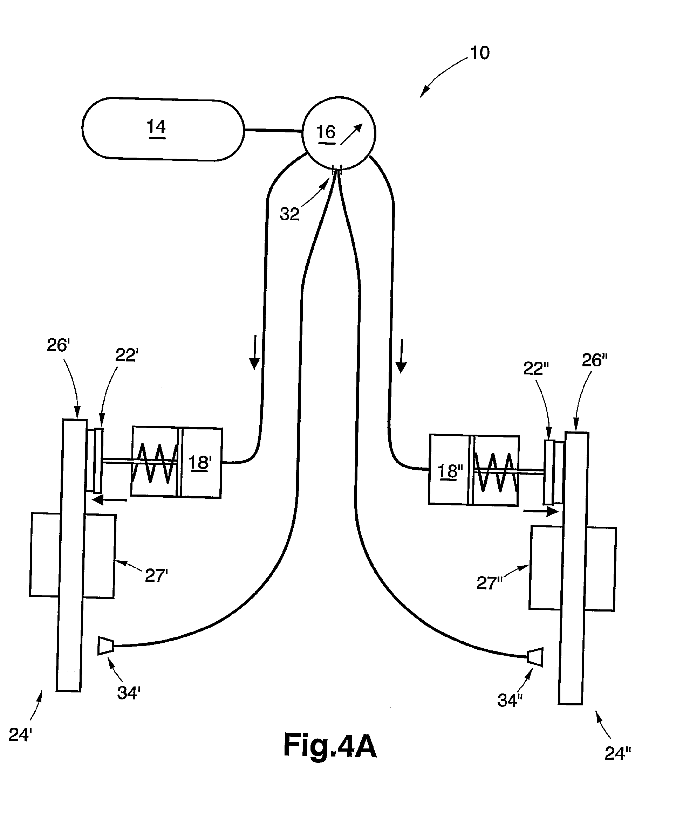

Fig. 4A illustrates a further embodiment of the vehicle system 10 of the present invention. The Fig. 4A vehicle system 10 comprises two brake assemblies 24', 24", each one comprising a separate brake pad 22', 22" with corresponding actuation means 18', 18". However, both the actuating means 18', 18" are connected to a common regulating means 16 which in turn is connected to a source 14 of pressure air. The common regulating means 16 may for instance be attached to a frame of the vehicle onto which the inventive vehicle system 10 is mounted. Fig. 4A illustrates the vehicle system 10 in a condition wherein the actuating means 18', 18" are actuated, i.e. brake pads 22', 22" are approaching the brake disks 26', 26". Thus, the regulating means 16, in the condition illustrated in Fig. 4A, supplies both the actuating means 18', 18" with pressurized air.

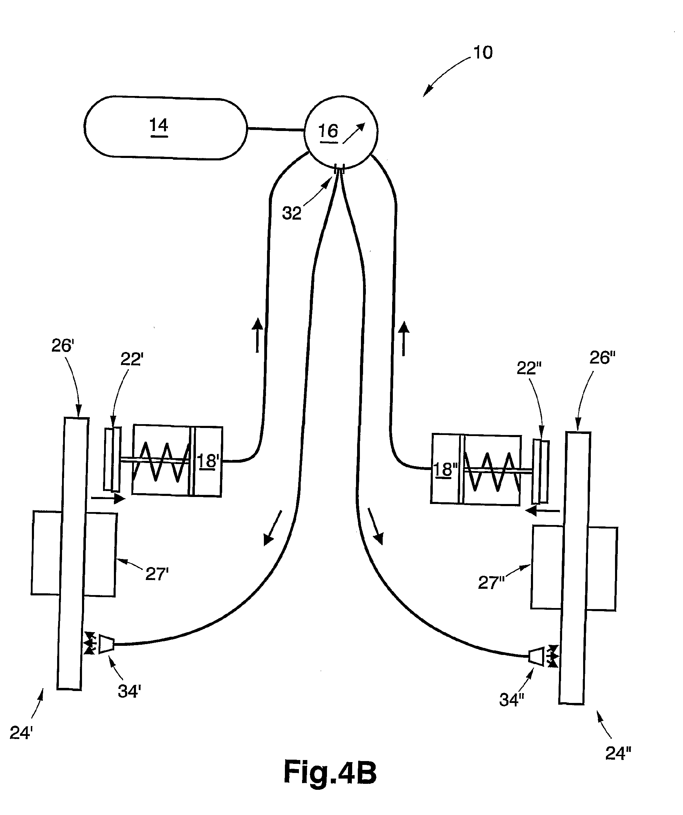

Fig. 4B on the other hand illustrates the embodiment of the vehicle system 10 illustrated in Fig. 4A when both the actuating means 18', 18" are retracted. In this condition, pressurized air is directed from the actuating means 18', 18" back to the regulating means 16. The pressurized air will then depart from the regulating means 16 through the exhaust outlet 32 and will progress to the discharge devices 34', 34" of the brake assemblies 24', 24".

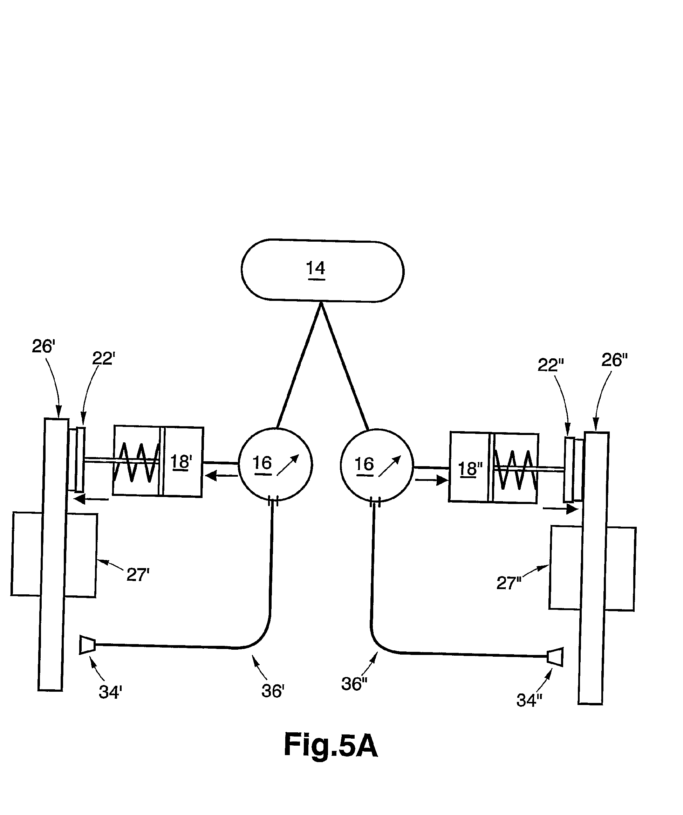

Fig. 5A illustrates an alternative to the Fig. 4A embodiment wherein each one of the brake assemblies 24', 24" is associated with an individual regulating means 16', 16". Each one of the individual regulating means 16', 16" is preferably located in the vicinity of its corresponding brake assembly 24', 24". In a similar manner as in Fig. 4A, Fig. 5A illustrates the vehicle system 10 in a condition wherein the actuating means 18', 18" are actuated such that each one of the regulating means 16', 16" supplies its corresponding actuating means 18', 18" with pressurized air.

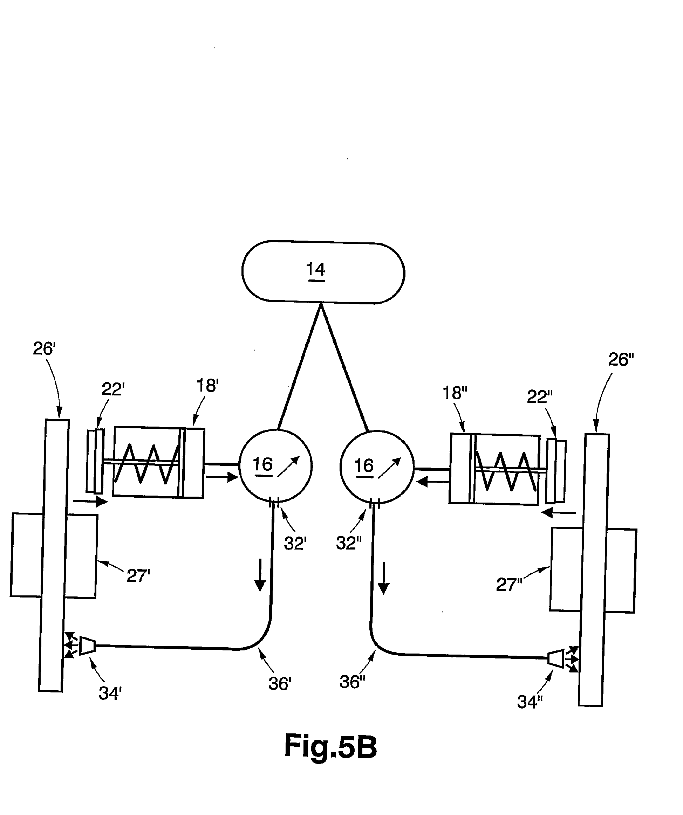

In analogy with Fig. 4B, Fig. 5B illustrates the embodiment of the vehicle system 10 illustrated in Fig. 5A when both the actuating means 18', 18" are retracted. In this condition, pressurized air is directed from each one of the actuating means 18', 18" back its corresponding regulating means 16', 16". The pressurized air will then depart from the regulating means 16', 16" through the exhaust outlets 32', 32" and will progress to the discharge devices 34', 34" of the brake assemblies 24', 24".

As compared to the Fig. 4A embodiment of the vehicle system 10 of the present invention, the Fig. 5A embodiment generally provides for a simpler connection between each exhaust outlet 32 and discharge device 34. In particular, since each regulating means 16', 16" in the Fig. 5A embodiment generally is close to its corresponding discharge device 34', 34", each exhaust valve 32', 32" may be arranged to be in fluid connection with its corresponding discharge device 34', 34" by a short conducting system 36', 36". On the other hand, the Fig. 4A embodiment presents the advantage of reducing the number of components in the vehicle system 10 since it requires only one regulating means 16.

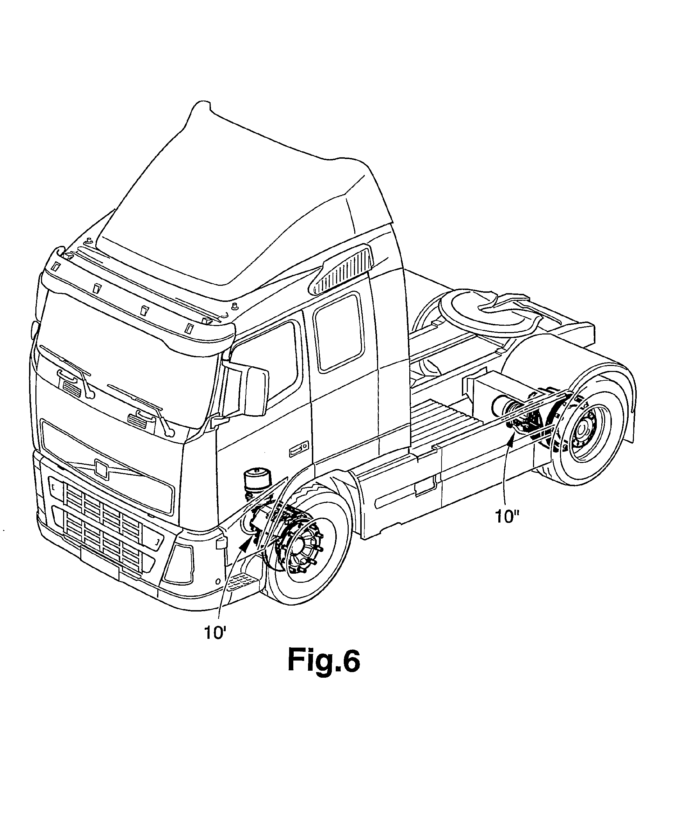

Fig. 6 illustrates a truck onto which the Fig. 5A embodiment of the vehicle system 10 of the present invention is installed. In Fig. 6, two vehicle systems 10', 10" are visible.

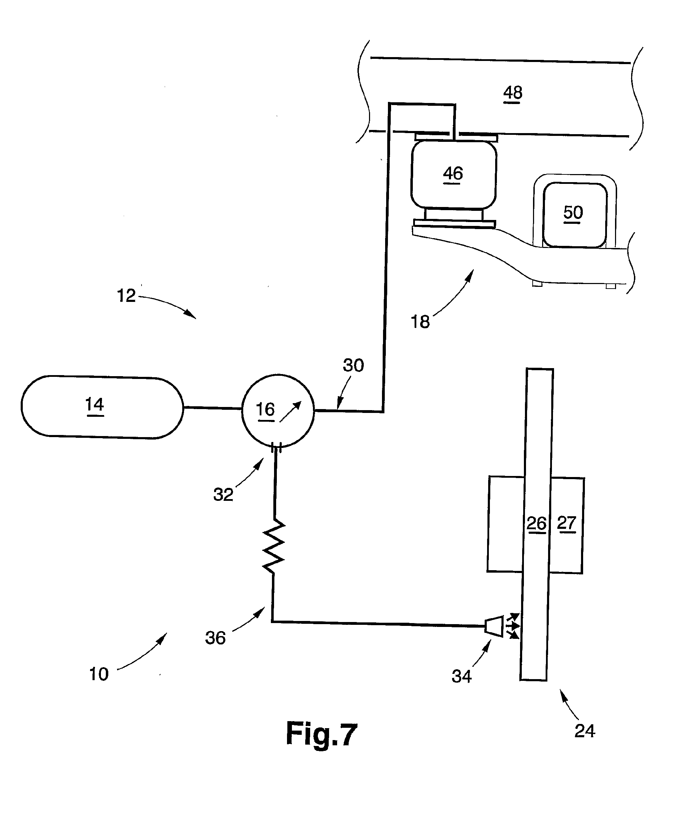

Fig. 7 illustrates a further embodiment of the vehicle system 10 of the present invention. In the Fig. 7 embodiment, the compressed air system 12 is a wheel suspension system. As such, the actuating means 18 in Fig. 7 comprises an air bellow 46 connecting a vehicle frame 48 and a wheel axis 50. In particularly when the vehicle frame 48 is lowered, i.e. when the vertical distance between the vehicle frame 48 and the wheel axis 50 is reduced, pressurized air from the air bellow 46 passes the exhaust outlet 32 and discharges from the discharge device 34 to at least a portion of the brake assembly 24. Since lowering of the vehicle frame 48 generally is performed when the vehicle is stationary, the air discharged from the discharge device 34 is preferably used for cleaning at least a portion of the brake assembly 24.

As may be realized when contemplating the description above in conjunction with Fig. 1 to Fig. 5, whenever the compressed air system 12 of the present invention is a brake system, cooling and/or cleaning of at least a portion of the brake assembly generally occurs during the retraction of the actuating means 18, i.e. during the end phase of a braking procedure. This generally provides for an appropriate cooling and/or cleaning of the brake assembly 24. However, in extreme conditions, e.g. during long periods of constant braking, there may be a need of additional cooling of the brake assembly 24.

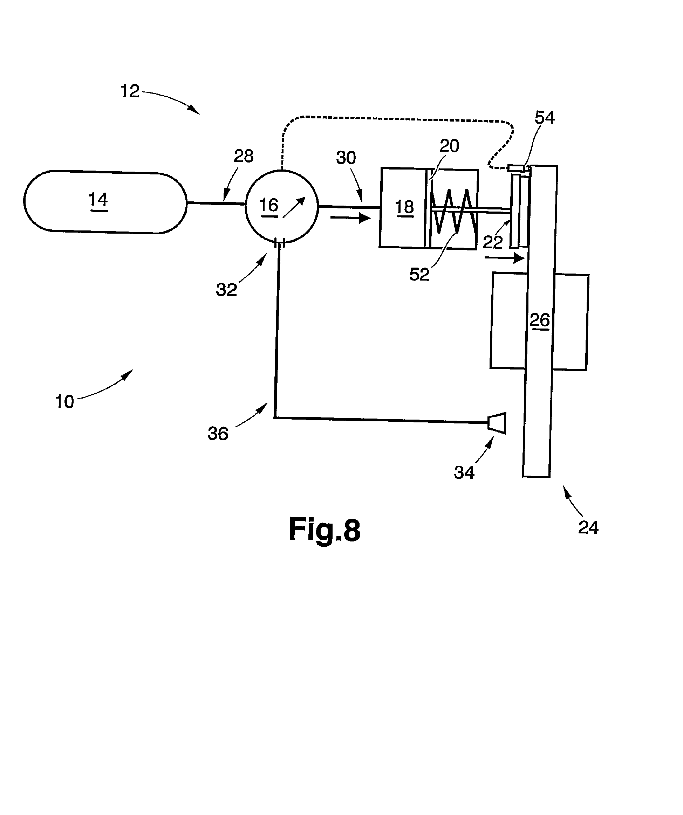

Various methods of obtaining such an additional cooling utilizing the inventive vehicle system 10 are presented with reference to Fig. 8 hereinbelow.

Fig. 8 illustrates an embodiment of the vehicle system 10 of the present invention which is similar to the Fig. 1A embodiment although a retracting means 52 of the actuating means 18 have been included in the Fig. 8 embodiment. As previously mention, the purpose of the retracting means is generally to retract the actuating means 18 when the exhaust valve 32 is open and thus conducts pressurized air from the actuating means 18. The retracting means 52 is in the Fig. 8 embodiment illustrated as a helical spring but other types of retracting means 52 are of course possible. The retracting means 52 may also preferably be pretensioned. As such, whenever the actuating means 18 is supplied with pressurized air which builds up an actuating force, the actuating means 18 is not actuated until the actuating force exceeds the pretension force of the retracting means 52.

The embodiment of the vehicle system 10 of the present invention illustrated in Fig. 8 further comprise a measuring arrangement 54 adapted to measure the temperature of at least a portion of the brake assembly 24. In Fig. 8, the measuring arrangement 54 is located close to the brake pad 22 and is directed towards the brake disk 26 but the measuring arrangement 54 may instead be located on any other component of the brake assembly 24. The measuring arrangement 54 is preferably in communication with a control arrangement of the vehicle system 10, which control arrangement in Fig. 8 is included in the regulating means 16. As such, the measuring arrangement 54 provides the regulating means 16 with information regarding the temperature of at least a portion of the brake assembly 24.

Instead of using a measuring assembly 54 in order to obtain a measure of the temperature of at least a portion of the brake assembly 24, the aforesaid temperature may instead be estimated. Purely by way of example, since heating of components of the brake assembly 24 generally is a result of friction heat attained during a braking operation, information regarding the brake duration and the brake pressure of a brake procedure is generally sufficient information for estimating the temperature of at least a portion of the brake assembly 24. As such, rather than directly measuring the temperature of the brake assembly 24, the temperature may instead be indirectly determined by an estimation procedure utilizing the brake duration and the brake pressure as input. Such an estimation procedure may preferably be implemented in the control arrangement of the regulating means 16, in particular if such a control arrangement comprises an electronic control unit (ECU). Purely by way of example, the estimation procedure may comprise a table look-up function.

Irrespective of how a measure of the temperature of at least a portion of the brake assembly 24 is obtained, should this measure indicate that the brake assembly is about to be over-heated, an additional cooling procedure may be initiated. Such an additional cooling procedure may preferably be initiated automatically by the control arrangement, should the estimated temperature exceed a predetermined value, which value preferably is stored in the control arrangement. Two variants of additional cooling procedures are presented hereinbelow.

Firstly, if the brake assembly 24 is in a braking condition, i.e. the brake pad 22 is in contact with the brake disk 26, when a temperature exceeding the predetermined value is determined, i.e. estimated or measured, the regulating means 16 may be arranged to impart a superimposed braking pulse onto the brake pad 22. As such, during the first variant of the additional cooling procedure, the air pressure in the actuating means 18 is varied about an average pressure which average pressure is the braking pressure required by the driver. Thus, during the braking condition, there will always be a contact between the brake pad 22 and the brake disk 26, but the contact pressure therebetween will vary. As previously discussed, the pressure in the actuator decreases due to the fact that air is discharged through the exhaust outlet 32 and hence through the discharge device 34. As such, the superimposed braking pulse will result in an additional cooling of the brake assembly 24. In addition to the cooling feature, the braking pulse may also be used to notify the driver of the vehicle onto which the vehicle system 10 is mounted that he has been braking for so long or so heavily that the brake assemblies are about to be over heated. In addition to the braking pulse, the method described hereinabove may comprise an additional step of notifying the driver that a brake assembly risks becoming over heated. Additional steps of notifying the driver may comprise, but are not limited to: lighting a warning lamp; displaying a warning symbol on a display visible to the driver, or sounding an audible alarm. The examples of notifying methods just described are known to a person skilled in the art as "fade warnings".

Optionally, after the completion of a brake operation, i.e. when the brake pad 22 is no longer in contact with the brake disk 26, an additional cooling of the brake assembly may be provided. As such, after the completion of a brake operation, the regulating means 16 may supply the actuating means with compressed air resulting in an actuating force on the actuating means 18. However, the supply of the compressed air is stopped before the actuating force exceeds the pretension force of the retracting means 52, i.e. the actuating means is not actuated. The regulating means 16 is then operated so as to conduct the pressurized air from the actuating means 18 to the discharge device 34 via the exhaust outlet 32. Again, this will result in an addition cooling and/or cleaning of the brake assembly 24. Naturally, this implementation of an additional cooling procedure need not to be performed immediately after a brake operation, but may of course be performed whenever the brake assembly 24 is not in a braking condition. As for the braking pulse method described hereinabove, the above mentioned implementation of an additional cooling may also comprise a "fade warning" step.

Further modifications of the invention within the scope of the appended claims are feasible. For instance, the implementations of the discharge devices 34 in the embodiments illustrated in Fig. 1A, Fig. 2 and Fig. 3 may of course be combined such that a vehicle system 10 comprises three discharge devices 34 discharging to various portions of the brake assembly 24. Moreover, further implementations of the vehicle system 10 may comprise even more discharge devices 34. Furthermore, although only cooling and cleaning of the brake assembly 24 has been mentioned as examples of procedures for ensuring the functionality of the brake assembly 24 other procedures are of course possible. Purely by way of example, the exhaust air may be used as a carrier gas adapted to transport e.g. a lubricant to specific locations of the brake assembly 24. As such, the present invention should not be considered as limited by the embodiments and figures described herein. Additionally, although only one type of brake assembly 24 has been illustrated and discussed in the description hereinabove, namely a disk brake, the present invention may of course be used for other types of brakes. Purely by way of example, the present invention may be used with a drum brake assembly, wherein a discharge device 34 is adapted to discharge air to the interior of the drum. Rather, the full scope of the invention should be determined by the appended claims, with reference to the description and drawings.

## Claims

1. A vehicle system (10) comprising a compressed air system (12) and a brake assembly (24), said compressed air system (12) comprising an actuating means (18) for actuating a pneumatic-controlled vehicle component and an exhaust outlet (32) adapted to discharge exhaust air from said actuating means (18), said vehicle system (10) comprising a discharge device (34) for discharging air to at least a portion of said brake assembly (24), wherein said exhaust outlet (32) and said discharge device (34) are in fluid communication so as to convey exhaust air from said actuating means (18) to said brake assembly (24), **characterized in that** the system comprises means for determining a temperature of at least a portion of said brake assembly (24), means for initiating an actuating sequence, said actuating sequence comprising an actuating and a retracting of said actuating means (18), such that exhaust air is obtained if said temperature is above a predetermined value.

2. The vehicle system (10) according to claim 1, wherein said compressed air system (12) is part of a brake system.

3. The vehicle system (10) according to claim 1 or 2, wherein said brake assembly (24) comprises a brake disk (26) and said discharge device (34) is adapted to discharge air to said brake disk (26).

4. The vehicle system (10) according to claim 3, wherein said brake disk (26) comprises a radially extending opening (38) and said discharge device (34) is adapted to discharge air into said radially extending opening (38).

5. The vehicle system (10) according to any one of the preceding claims, wherein said brake assembly (24) comprises two components which are coupled to each other by means of a splines arrangement (44), wherein said discharge device (34) is adapted to discharge air onto said splines arrangement (44) in order to clean said splines arrangement.

6. The vehicle system (10) according to claim 5, wherein one of said components is said brake disk (26).

7. The vehicle system (10) according to any one of claims 2 - 6, wherein said compressed air system (12) further comprises: a source of compressed air (14) and regulating means (16), wherein said source (14) is in fluid communication with said regulating means (16) and said regulating means (16) is in fluid communication with said actuating means (18), said regulating means (16) being adapted to regulate a supply of compressed air to said actuating means (18).

8. The vehicle system (10) according to claim 7, wherein said regulating means (16) is an EBS modulator located in the vicinity of said brake assembly (24).

9. The vehicle system (10) according to any one of the preceding claims, wherein said actuating means (18) is arranged to actuate said brake assembly (24) for braking a vehicle.

10. The vehicle system (10) according to any one claims 1 - 8, wherein said actuating means (18) is arranged to actuate an air suspension system of a vehicle.

11. A vehicle, comprising a vehicle system (10) according to any one of the preceding claims.

12. A method of ensuring the functionality of a brake assembly (24) of a vehicle, said vehicle further comprising a compressed air system (12) comprising an actuating means (18), for actuating a pneumatic-controlled vehicle component, and an exhaust outlet (32) adapted to discharge exhaust air from said actuating means (18), wherein the ensuring of the functionality of the brake assembly (24) comprises a step of discharging pressurized air to said brake assembly (24), wherein the method further comprises a step of conducting said exhaust air to said brake assembly (24), such that said exhaust air constitutes the pressurized air, **characterized in that** the method comprises a step of determining a temperature of at least a portion of said brake assembly (24), should said temperature be above a predetermined value, said method further comprising a step of initiating an actuating sequence, said actuating sequence comprising an actuating and a retracting of said actuating means (18), such that exhaust air is obtained.

13. The method of ensuring the functionality of a brake assembly according to claim 12, wherein said compressed air system (12) is a brake system.

14. The method of ensuring the functionality of a brake assembly according to claim 13, wherein the method is performed during a braking procedure wherein the brake system applies a first braking pressure to a member of said brake assembly (24), wherein said actuating sequence is adapted to perform a braking pressure pulse the average pressure of which substantially equals said first braking pressure.

15. A vehicle system (10) comprising a compressed air system (12) and a brake assembly (24), said compressed air system (12) comprising an actuating means (18) for actuating a pneumatic-controlled vehicle component and an exhaust outlet (32) adapted to discharge exhaust air from said actuating means (18), said vehicle system (10) comprising a discharge device (34) for discharging air to at least a portion of said brake assembly (24), wherein said exhaust outlet (32) and said discharge device (34) are in fluid communication so as to convey exhaust air from said actuating means (18) to said brake assembly (24), wherein said brake assembly (24) comprises two components which are coupled to each other by means of a splines arrangement (44), wherein said discharge device (34) is adapted to discharge air onto said splines arrangement (44) in order to clean said splines arrangement.

16. A vehicle system (10) comprising a compressed air system (12) and a brake assembly (24), said compressed air system (12) comprising an actuating means (18) for actuating a pneumatic-controlled vehicle component and an exhaust outlet (32) adapted to discharge exhaust air from said actuating means (18), said vehicle system (10) comprising a discharge device (34) for discharging air to at least a portion of said brake assembly (24), wherein said exhaust outlet (32) and said discharge device (34) are in fluid communication so as to convey exhaust air from said actuating means (18) to said brake assembly (24), wherein said brake assembly (24) comprises a brake disk (26), wherein said brake disk (26) comprises a radially extending opening (38) which is in communication with a circumferentially extending cavity (40) in the hub (27), and said discharge device (34) is adapted to discharge air into said circumferentially extending cavity (40) for discharge via said radially extending opening (38).

## Patentansprüche

1. Fahrzeugsystem (10) mit einem Druckluftsystem (12) und einer Bremsanordnung (24), wobei das Druckluftsystem (12) eine Betätigungseinrichtung (18) zur Betätigung einer pneumatisch gesteuerten Fahrzeugkomponente und einen Ausströmauslass (32) umfasst, der dazu ausgelegt ist, Ausströmluft von der Betätigungseinrichtung (18) abzuführen, wobei das Fahrzeugsystem (10) eine Abführvorrichtung (34) zur Abführung von Luft zu wenigstens einem Abschnitt der Bremsanordnung (24) umfasst, wobei der Ausströmauslass (32) und die Abführvorrichtung (34) in Fluidverbindung stehen, um Ausströmluft von der Betätigungseinrichtung (18) zu der Bremsanordnung (24) zu befördern, **dadurch gekennzeichnet, dass** das System Einrichtungen zur Bestimmung einer Temperatur wenigstens eines Abschnitts der Bremsanordnung (24) und Einrichtungen zur Initiierung einer Betätigungssequenz umfasst, wobei die Betätigungssequenz eine Betätigung und eine Zurückziehung der Betätigungseinrichtung (18) umfasst, so dass Ausströmluft erhalten wird, wenn die Temperatur oberhalb eines vorherbestimmten Wertes liegt.

2. Fahrzeugssystem (10) nach Anspruch 1, wobei das Druckluftsystem (12) Teil eines Bremssystems ist.

3. Fahrzeugsystem (10) nach Anspruch 1 oder 2, wobei die Bremsanordnung (24) eine Bremsscheibe (26) umfasst und die Abführvorrichtung (34) dazu ausgelegt ist, Luft zu der Bremsscheibe (26) abzuführen.

4. Fahrzeugsystem (10) nach Anspruch 3, wobei die Bremsscheibe (26) eine sich radial erstreckende Öffnung (38) umfasst und die Abführvorrichtung (34) dazu ausgelegt ist, Luft in die sich radial erstreckende Öffnung (38) abzuführen.

5. Fahrzeugsystem (10) nach irgendeinem der vorhergehenden Ansprüche, wobei die Bremsanordnung (24) zwei Komponenten umfasst, die miteinander mittels einer Keilverzahnung (44) verbunden sind, wobei die Abführvorrichtung (34) dazu ausgelegt ist, Luft auf die Keilverzahnung (44) abzuführen, um die Keilverzahnung zu reinigen.

6. Fahrzeugsystem (10) nach Anspruch 5, wobei einer der Komponenten die Bremsscheibe (26) ist.

7. Fahrzeugssystem (10) nach einem der Ansprüche 2 - 6, wobei das Druckluftsystem (12) außerdem umfasst: eine Druckluftquelle (14) und eine Regeleinrichtung (16), wobei die Quelle (14) in Fluidverbindung mit der Regeleinrichtung (16) steht und die Regeleinrichtung (16) in Fluidverbindung mit der Betätigungseinrichtung (18) steht, wobei die Regeleinrichtung (16) dazu ausgelegt ist, eine Versorgung von Druckluft zu der Betätigungseinrichtung (18) zu regeln.

8. Fahrzeugsystem (10) nach Anspruch 7, wobei die Regeleinrichtung (16) ein EBS-Modulator ist, der in der Nähe der Bremsanordnung (24) angeordnet ist.

9. Fahrzeugsystem (10) nach irgendeinem der vorhergehenden Ansprüche, wobei die Betätigungseinrichtung (18) zur Betätigung der Bremsanordnung (24) zum Bremsen eines Fahrzeugs ausgelegt ist.

10. Fahrzeugsystem (10) nach einem der Ansprüche 1 - 8, wobei die Betätigungseinrichtung (18) zur Betätigung eines Luftfederungssystems eines Fahrzeugs konfiguriert ist.

11. Fahrzeug mit einem Fahrzeugsystem (10) nach einem der vorhergehenden Ansprüche.

12. Verfahren zur Sicherstellung der Funktionalität einer Bremsanordnung (24) eines Fahrzeugs, wobei das Fahrzeug außerdem ein Druckluftsystem (12) mit einer Betätigungseinrichtung (18) zur Betätigung einer pneumatisch gesteuerten Fahrzeugkomponente und einen Ausströmauslass (32) umfasst, der dazu ausgelegt ist, Ausströmluft von der Betätigungseinrichtung (18) abzuführen, wobei die Sicherstellung der Funktionalität der Bremsanordnung (24) einen Schritt der Abführung unter Druck gesetzter Luft zu der Bremsanordnung (24) umfasst, wobei das Verfahren außerdem einen Schritt der Leitung der Ausströmluft zu der Bremsanordnung (24) umfasst, so dass die Ausströmluft die unter Druck gesetzte Luft bildet, **dadurch gekennzeichnet, dass** das Verfahren einen Schritt der Bestimmung einer Temperatur wenigstens eines Abschnitts der Bremsanordnung (24) umfasst, falls die Temperatur einen vorherbestimmten Wert überschreitet, wobei das Verfahren außerdem den Schritt einer Initiierung einer Betätigungssequenz umfasst, wobei die Betätigungssequenz eine Betätigung und eine Zurückziehung der Betätigungseinrichtung (18) umfasst, so dass die Ausströmluft erhalten wird.

13. Verfahren zur Sicherstellung der Funktionalität einer Bremsanordnung nach Anspruch 12, wobei das Druckluftsystem (12) ein Bremssystem ist.

14. Verfahren zur Sicherstellung der Funktionalität einer Bremsanordnung nach Anspruch 13, wobei das Verfahren während eines Bremsvorgangs durchgeführt wird, in dem das Bremssystem eine erste Bremskraft auf ein Element der Bremsanordnung (24) ausübt, wobei die Betätigungssequenz dazu ausgelegt ist, einen Bremsdruckimpuls durchzuführen, dessen Durchschnittsdruck im Wesentlichen gleich dem ersten Bremsdruck ist.

15. Fahrzeugsystem (10) mit einem Druckluftsystem (12) und einer Bremsanordnung (24), wobei das Druckluftsystem (12) eine Betätigungseinrichtung (18) zur Betätigung einer pneumatisch gesteuerten Fahrzeugkomponente und einen Ausströmauslass (32) umfasst, der dazu ausgelegt ist, Ausströmluft von der Betätigungseinrichtung (18) abzuführen, wobei das Fahrzeugsystem (10) eine Abführvorrichtung (34) für eine Abfuhr von Luft zu wenigstens einem Abschnitt der Bremsanordnung (24) umfasst, wobei der Ausströmauslass (32) und die Abführvorrichtung (34) in Fluidverbindung stehen, um Ausströmluft von der Betätigungseinrichtung (18) zu der Bremsanordnung (24) zu befördern, wobei die Bremsanordnung (24) zwei Komponenten umfasst, die miteinander mittels einer Keilverzahnung (44) verbunden sind, wobei die Abführvorrichtung (34) dazu ausgelegt ist, Luft auf die Keilverzahnung (44) abzuführen, um die Keilverzahnung zu reinigen.

16. Fahrzeugsystem (10) mit einem Druckluftsystem (12) und einer Bremsanordnung (24), wobei das Druckluftsystem (12) eine Betätigungseinrichtung (18) zur Betätigung einer pneumatisch gesteuerten Fahrzeugkomponente und einen Ausströmauslass (32) umfasst, der dazu ausgelegt ist, Ausströmluft von der Betätigungseinrichtung (18) abzuführen, wobei das Fahrzeugsystem (10) eine Abführvorrichtung (34) für eine Abfuhr von Luft zu wenigstens einem Abschnitt der Bremsanordnung (24) umfasst, wobei der Ausströmauslass (32) und die Abführvorrichtung (34) in Fluidverbindung miteinander stehen, um Ausströmluft von der Betätigungseinrichtung (18) zu der Bremsanordnung (24) zu befördern, wobei die Bremsanordnung (24) eine Bremsscheibe (26) umfasst, wobei die Bremsscheibe (26) eine sich radial erstreckende Öffnung (38) umfasst, die mit einem sich in Umfangsrichtung erstreckenden Hohlraum (40) in der Nabe (27) in Verbindung steht, und die Abführvorrichtung (34) dazu ausgelegt ist, Luft in den sich in Umfangsrichtung erstreckenden Hohlraum (40) für eine Abführung über die sich radial erstreckende Öffnung (38) abzuführen.

## Revendications

1. Système de véhicule (10) comprenant un système d'air comprimé (12) et un ensemble de frein (24), ledit système d'air comprimé (12) comprenant un moyen d'actionnement (18) pour actionner un composant de véhicule à commande pneumatique et une sortie d'échappement (32) adaptée pour décharger l'air d'échappement à partir dudit moyen d'actionnement (18), ledit système de véhicule (10) comprenant un dispositif de décharge (34) pour décharger l'air vers au moins une partie dudit ensemble de frein (24), où ladite sortie d'échappement (32) et ledit dispositif de décharge (34) sont en communication fluidique de manière à transporter l'air d'échappement à partir dudit moyen d'actionnement (18) vers ledit ensemble de frein (24), **caractérisé en ce que** le système comprend un moyen pour déterminer une température d'au moins une partie dudit ensemble de frein (24), un moyen pour initier une séquence d'actionnement, ladite séquence d'actionnement comprenant un actionnement et une rétraction dudit moyen d'actionnement (18), de sorte que l'air d'échappement soit obtenu si ladite température est supérieure à une valeur prédéterminée.

2. Système de véhicule (10) selon la revendication 1, dans lequel ledit système d'air comprimé (12) fait partie d'un système de frein.

3. Système de véhicule (10) selon la revendication 1 ou 2, dans lequel ledit ensemble de frein (24) comprend un disque de frein (26) et ledit dispositif de décharge (34) est adapté pour décharger l'air vers ledit disque de frein (26).

4. Système de véhicule (10) selon la revendication 3, dans lequel ledit disque de frein (26) comprend une ouverture s'étendant radialement (38) et ledit dispositif de décharge (34) est adapté pour décharger l'air dans ladite ouverture s'étendant radialement (38).

5. Système de véhicule (10) selon l'une quelconque des revendications précédentes, dans lequel ledit ensemble de frein (24) comprend deux composants qui sont couplés l'un à l'autre au moyen d'un agencement de cannelures (44), où ledit dispositif de décharge (34) est adapté pour décharger l'air sur ledit agencement de cannelures (44) afin de nettoyer ledit agencement de cannelures.

6. Système de véhicule (10) selon la revendication 5, dans lequel l'un desdits composants est ledit disque de frein (26).

7. Système de véhicule (10) selon l'une quelconque des revendications 2 à 6, dans lequel ledit système d'air comprimé (12) comprend en outre : une source d'air comprimé (14) et un moyen de régulation (16), où ladite source (14) est en communication fluidique avec ledit moyen de régulation (16) et ledit moyen de régulation (16) est en communication fluidique avec ledit moyen d'actionnement (18), ledit moyen de régulation (16) étant adapté pour réguler une alimentation en air comprimé audit moyen d'actionnement (18).

8. Système de véhicule (10) selon la revendication 7, dans lequel ledit moyen de régulation (16) est un modulateur EBS situé au voisinage dudit ensemble de frein (24).

9. Système de véhicule (10) selon l'une quelconque des revendications précédentes, dans lequel ledit moyen d'actionnement (18) est agencé pour actionner ledit ensemble de frein (24) pour freiner un véhicule.

10. Système de véhicule (10) selon l'une quelconque des revendications 1 à 8, dans lequel ledit moyen d'actionnement (18) est agencé pour actionner un système de suspension pneumatique d'un véhicule.

11. Véhicule comprenant un système de véhicule (10) selon l'une quelconque des revendications précédentes.

12. Procédé permettant de garantir la fonctionnalité d'un ensemble de frein (24) d'un véhicule, ledit véhicule comprenant en outre un système d'air comprimé (12) comprenant un moyen d'actionnement (18) pour actionner un composant de véhicule à commande pneumatique et une sortie d'échappement (32) adaptée pour décharger l'air d'échappement à partir dudit moyen d'actionnement (18), où la garantie de la fonctionnalité de l'ensemble de frein (24) comprend une étape qui consiste à décharger l'air sous pression vers ledit ensemble de frein (24), où le procédé comprend en outre une étape qui consiste à conduire ledit air d'échappement vers ledit ensemble de frein (24), de sorte que ledit air d'échappement constitue l'air sous pression, **caractérisé en ce que** le procédé comprend une étape qui consiste à déterminer une température d'au moins une partie dudit ensemble de frein (24), si ladite température est supérieure à une valeur prédéterminée, ledit procédé comprenant en outre une étape qui consiste à initier une séquence d'actionnement, ladite séquence d'actionnement comprenant un actionnement et une rétraction dudit moyen d'actionnement (18), de sorte que l'air d'échappement soit obtenu.

13. Procédé permettant de garantir la fonctionnalité d'un ensemble de frein selon la revendication 12, dans lequel ledit système d'air comprimé (12) est un système de frein.

14. Procédé permettant de garantir la fonctionnalité d'un ensemble de frein selon la revendication 13, dans lequel le procédé est effectué au cours d'une procédure de freinage où le système de frein applique une première pression de freinage sur un élément dudit ensemble de frein (24), où ladite séquence d'actionnement est adaptée pour effectuer une impulsion de pression de freinage dont la pression moyenne est essentiellement égale à ladite première pression de freinage.

15. Système de véhicule (10) comprenant un système d'air comprimé (12) et un ensemble de frein (24), ledit système d'air comprimé (12) comprenant un moyen d'actionnement (18) pour actionner un composant de véhicule à commande pneumatique et une sortie d'échappement (32) adaptée pour décharger l'air d'échappement à partir dudit moyen d'actionnement (18), ledit système de véhicule (10) comprenant un dispositif de décharge (34) pour décharger l'air vers au moins une partie dudit ensemble de frein (24), où ladite sortie d'échappement (32) et ledit dispositif de décharge (34) sont en communication fluidique de manière à transporter l'air d'échappement à partir dudit moyen d'actionnement (18) vers ledit ensemble de frein (24), où ledit ensemble de frein (24) comprend deux composants qui sont couplés l'un à l'autre au moyen d'un agencement de cannelures (44), où ledit dispositif de décharge (34) est adapté pour décharger l'air sur ledit agencement de cannelures (44) afin de nettoyer ledit agencement de cannelures.

16. Système de véhicule (10) comprenant un système d'air comprimé (12) et un ensemble de frein (24), ledit système d'air comprimé (12) comprenant un moyen d'actionnement (18) pour actionner un composant de véhicule à commande pneumatique et une sortie d'échappement (32) adaptée pour décharger l'air d'échappement à partir dudit moyen d'actionnement (18), ledit système de véhicule (10) comprenant un dispositif de décharge (34) pour décharger l'air vers au moins une partie dudit ensemble de frein (24), où ladite sortie d'échappement (32) et ledit dispositif de décharge (34) sont en communication fluidique de manière à transporter l'air d'échappement à partir dudit moyen d'actionnement (18) vers ledit ensemble de frein (24), où ledit ensemble de frein (24) comprend un disque de frein (26), où ledit disque de frein (26) comprend une ouverture s'étendant radialement (38) qui est en communication avec une cavité s'étendant circonférentiellement (40) dans le moyeu (27), et ledit dispositif de décharge (34) est adapté pour décharger l'air dans ladite cavité s'étendant circonférentiellement (40) pour la décharge par l'intermédiaire de ladite ouverture s'étendant radialement (38).
